Europäisches Patentamt

European Patent Office

Office européen des brevets

(11) Veröffentlichungsnummer : **0 172 475 B1**

(12) **EUROPÄISCHE PATENTSCHRIFT**

(45) Veröffentlichungstag der Patentschrift :
07.03.90

(21) Anmeldenummer : 85109744.4

(22) Anmeldetag : 02.08.85

(51) Int. Cl.⁵ : **F 02 D 21/08, F 02 D 23/02, F 02 D 1/06, F 02 M 41/12**

(54) Verfahren zum Betrieb einer Diesel-Brennkraftmaschine, insbesondere für Fahrzeuge, mit Teillast wirksamer Abgasrückführung und einer Einspritzpumpe mit veränderbarem Vollastanschlag.

(30) Priorität : 08.08.84 DE 3429222

(43) Veröffentlichungstag der Anmeldung :
26.02.86 Patentblatt 86/09

(45) Bekanntmachung des Hinweises auf die Patenterteilung : 07.03.90 Patentblatt 90/10

(84) Benannte Vertragsstaaten :
FR GB IT SE

(56) Entgegenhaltungen :
EP--A-- 0 008 923
DE--A-- 3 220 982
DE--A-- 3 318 309
DE--C-- 3 043 752
GB--A-- 2 119 134
US--A-- 4 364 351
PATENT ABSTRACTS OF JAPAN, Band 7, Nr. 68 (M-201)[1213], 19. März 1983; & JP - A - 57 210 157 (NIPPON JIDOSHA BUHIN SOGO KENKYUSHO) 23.12.1982
PATENT ABSTRACTS OF JAPAN, Band 7, Nr. 246 (M-253)[1391], 2. November 1983; & JP - A - 58 133 429 (TOYO KOGYO) 09.08.1983

(73) Patentinhaber : Bayerische Motoren Werke Aktiengesellschaft
Patentabteilung AJ-3 Postfach 40 02 40 Petuelring 130
D-8000 München 40 (DE)

(72) Erfinder : Maier, Peter
Walchenseeplatz 1
D-8000 München 90 (DE)
Erfinder : Gründer, Edgar
Deisenhofenerstrasse 79c
D-8000 München 90 (DE)

(74) Vertreter : Bücken, Helmut
Bayerische Motoren Werke Aktiengesellschaft Postfach 40 02 40 Petuelring 130 - AJ-30
D-8000 München 40 (DE)

## Beschreibung

Die Erfindung bezieht sich auf ein Verfahren zum Betrieb einer Diesel-Brennkraftmaschine gemäß dem 1. Teil des Patentanspruches 1 sowie auf Vorrichtungen zur Durchführung des Verfahrens gemäß Anspruch 2.

Bei Diesel-Brennkraftmaschinen dient bekanntlich die Abgasrückführung insbesondere zur Verminderung von Stickoxydemissionen. Diese sind bei Diesel-Brennkraftmaschinen im Teillastbetrieb wegen des hohen Luftüberschusses besonders hoch. Um die Bestimmungen für sehr niedrige Emissionswerte sicher einzuhalten, wird die Brennkraftmaschine mit hohen Abgasrückführraten betrieben.

Weiter ist bei Diesel-Einspritzpumpen bekannt, daß der Schwenkbereich eines mit dem Fahrpedal des Fahrzeuges verbundenen Drehzahl-Verstellhebels für die Einspritzmengen-Zumessung von Nullast über Teillast bis zur Vollast relativ klein ist. Beim Betrieb im unteren Last- und Drehzahlbereich bewirkt eine bereits geringfügige Verschwenkung des Drehzahl-Verstellhebels zur Laständerung für eine Beschleunigung des Fahrzeuges aus einer Konstantfahrt eine Änderung von einer korrekten Teillast-Einspritzmenge zu einer zumindest kurzfristig gegebenen Vollast-Einspritzmenge. Diese für üblichen Vollastbetrieb vorgesehene Vollast-Einspritzmenge führt in Verbindung mit den oben erwähnten hohen Abgasrückführraten wegen Luftmangels im Brennraum zu einem Rußausstoß.

Aus der DE-PS 30 43 752 ist ein Verfahren zum Betrieb einer Diesel-Brennkraftmaschine mit Abgasrückführung bekannt, wobei ein Rußausstoß beim Beschleunigen im Teillastbetrieb durch Abstellen der Abgasrückführung und einer nach Ablauf einer Totzeit einsetzenden geregelten Brennstoffzufuhr vermieden wird. Die nach einer Übergangsfunktion erster oder höherer Ordnung angestrebte Brennstoff- bzw. Einspritzmengen-Zumessung zur Erzielung einer optimalen Abgaszusammensetzung bei Beschleunigungen in der unteren Teillast macht zur Einhaltung niedrig angesetzter Schadstoffemissionswerte bei engen Toleranzen einen hohen gerätetechnischen Aufwand erforderlich. Weiter kann sich mit diesem Verfahren ein relativ träges Beschleunigungsverhalten ergeben.

Einen hohen gerätetechnischen Aufwand weist ferner die aus der DE-A-33 18 309 bekannte Diesel-Einspritzpumpe auf, bei der die jeweilige Kraftstoff-Einspritzmenge mittels eines Rechners in Abhängigkeit von Absolutdruckwerten und anderen Parametern bestimmt wird. Bei wirksamer Abgasrückführung wird hierbei ferner die jeweilige Abgasrückführrate ebenfalls absolutdruckabhängig gesteuert, wobei die jeweilige absolutdruckabhängig bestimmte Einspritzmenge zur Vermeidung eines Rußausstoßes auf einen niedrigen Vollastwert gesteuert wird.

Schließlich ist aus der DE-A-32 20 982 eine Diesel-Einspritzpumpe mit einer einfachen mechanisch-pneumatischen Vorrichtung zur Festlegung der jeweiligen Kraftstoff-Einspritzmenge bekannt. Bei dieser bekannten Einspritzpumpe werden die im Oberbegriff des Patentanspruches 1 genannten Verfahrensschritte zur absolutdruckabhängigen Bestimmung der jeweiligen Einspritzmenge durchgeführt, es ist jedoch eine Einspritzmengenfestlegung bei einer wirksamen Abgasrückführung nicht vorgesehen.

Der Erfindung liegt die Aufgabe zugrunde, ein Verfahren zum Betrieb einer Diesel-Brennkraftmaschine zu schaffen, bei dem die übliche Vollast-Einspritzmenge in der Teillastbeschleunigung unter Beibehaltung der Abgasrückführraten mittels einfacher Steuerung und geringem Geräteaufwand derart überspielt wird, daß ein Rußausstoß weitestgehend vermieden wird, ohne dabei das Beschleunigungsverhalten wesentlich nachteilig zu beeinflussen.

Diese Aufgabe wird bei einem Verfahren nach dem 1. Teil des Patentanspruches 1 bzw. 2 dadurch gelöst mit den Merkmalen aus dem Anspruch 1 bzw. 2. Mit einem veränderbaren Vollastanschlag bewirkte niedrigste Vollast-Einspritzmenge bedeutet bekanntlich die einer Diesel-Brennkraftmaschine in großen Höhen entsprechend der geringeren Ladung angepaßte Brennstoffmenge. Diese wird für das Verfahren nach der Erfindung so bestimmt, daß bei einer Beschleunigung im unteren Teillastbereich bei wirksamer Abgasrückführung im wesentlichen ein Rußausstoß unterbleibt. Sie reicht zudem als niedrigste Vollast-Einspritzmenge für ein dynamisches Beschleunigen bei normalen Atmosphärendruck aus. Mit der Erfindung wird die eingangs geschilderte, aus Fahrpedal- und Drehzahlverstellhebel-Stellung beim Beschleunigen kurzfristig sich ergebende und bei unveränderter Abgasrückführung zu fette Vollast-Einspritzmenge sicher vermieden. Der Aufwand an Geräten zur Durchführung des Verfahrens wird dadurch geringgehalten, daß zur Ansteuerung des Vollastanschlages lediglich das Signal der wirksamen Abgasrückführung im Teillastbetrieb vorliegen muß. Damit wird weiter deutlich, daß der Vollastanschlag für die Dauer der wirksamen Abgasrückführung in einer der niedrigsten Vollast-Einspritzmenge entsprechenden Stellung gehalten wird. Er ist damit vom Beschleunigungs-Signal entkoppelt, so daß ein Rußausstoß durch evtl. verzögerte Ansteuerung des Vollastanschlages ebenfalls entfällt.

In weiteren Ansprüchen sind Ausführungsbeispiele von Vorrichtungen zur Durchführung des erfindungsgemäßen Verfahrens beschrieben. Diese haben den Vorteil, daß sie in erheblichem Umfang aus an Brennkraftmaschinen und/oder Einspritzpumpen bekannten Mitteln gebildet sind und für zusätzliche Mittel z. T. bekannte Einrichtungen verwendbar sind. Der Geräteaufwand gestaltet sich damit kostengünstig.

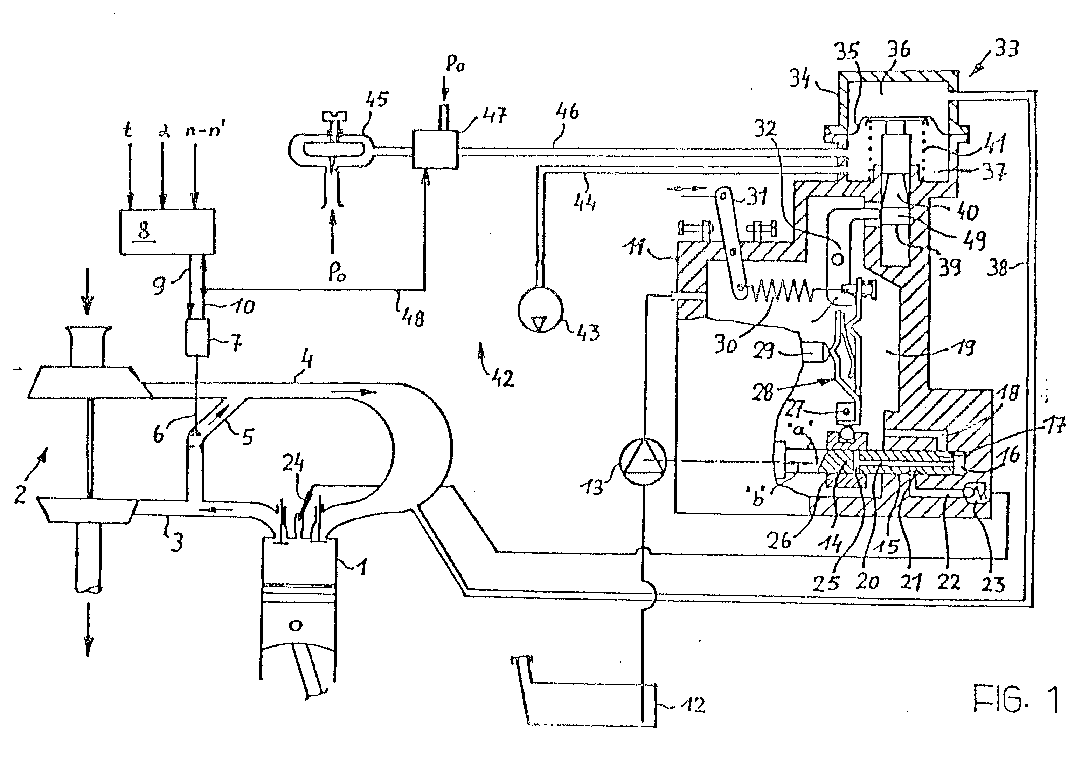

Ein zur Durchführung des Verfahrens bevorzugtes Ausführungsbeispiel ist in der Zeichnung (Fig. 1) dargestellt. Es zeigen :

Fig. 1 in schematischer Darstellung eine aufgeladene Diesel-Brennkraftmaschine mit Abgasrückführung und einer Einspritzpumpe mit absolut-druckgesteuertem Vollastanschlag,

Fig. 2 in schematischer Darstellung eine Diesel-Brennkraftmaschine in Saugausführung mit einer Einspritzpumpe mit atmosphärendruck-abhängigem Vollastanschlag, ein Vergleichsbeispiel.

Eine Diesel-Brennkraftmaschine 1 ist mit einem Abgasturbolader 2 ausgerüstet. Eine Abgasleitung 3 ist mit einer Luftzuführung 4 zur Abgasrückführung durch eine Leitung 5 verbunden. Ein Ventil 6 in der Leitung 5 steuert die Abgasrückführung. Das Ventil 6 wirkt mit einer Stelleinrichtung 7 zusammen, die mit einer Steuereinrichtung 8 über Signalleitungen 9 und 10 in Wirkverbindung steht. Eine Abgasrückführung ist in der unteren Teillast der Diesel-Brennkraftmaschine 1 vorgesehen. Hierfür werden der Steuereinrichtung 8 ein Lastsignal und ein Drehzahl-Signal zugeführt. Das Lastsignal ist durch die Winkelstellung « α » eines Fahrpedals (nicht gezeigt) dargestellt, während das Drehzahl-Signal über einen von den Drehzahlen n und n' begrenzten Drehzahlbereich der unteren Teillast gebildet wird. Weiter kann bei der Bildung eines über die Leitung 9 der Stelleinrichtung 7 zugeführten Steuersignals die Maschinentemperatur « t » berücksichtigt werden. Die Leitung 10 dient für das Rückmeldesignal, daß das Ventil 6 die Leitung 5 freigegeben hat.

Die Diesel-Brennkraftmaschine 1 ist ferner mit einer Verteiler-Einspritzpumpe 11 ausgerüstet. Diese steht mit der Maschine 1 in Antriebsverbindung zum Antrieb einer den Kraftstoff aus dem Tank 12 fördernden Vorförderpumpe 13 und eines Verteilerkolbens 14. Wie die Pfeile « a » und « b » anzeigen, führt der Verteilerkolben 14 eine Drehbewegung und Hubbewegungen aus. Der Verteilerkolben 14 ist in einer Gehäusebohrung 15 angeordnet und begrenzt in dieser einen Arbeitsraum 16, der beim Saughub des Verteilerkolbens 14 über Steuerkanten 17 und eine Saugbohrung 18 mit dem Innenraum 19 der Einspritzpumpe 11 verbunden und mit Kraftstoff gefüllt wird. Beim Druckhub des Verteilerkolbens 14 wird der eingeführte Kraftstoff durch eine Längsbohrung 20 und einer mit dieser verbundenen Verteilernut 21 im Verteilerkolben 14 über eine Druckleitung 22 mit einem Druckventil 23 zu einer Einspritzdüse 24 gefördert. Die Längsbohrung 20 steht an ihrem dem Arbeitsraum 16 abgewandten Ende mit einer Querbohrung 25 in Verbindung. Zum Bestimmen des Förderendes wird die Querbohrung 25 von einem auf dem Verteilerkolben 14 verschiebbar angeordneten Regelschieber 26 aufgesteuert. An dem Regelschieber 26 greift eine auf einem Bolzen 27 schwenkbar gelagerte Regelhebelgruppe 28 an, die von einer Reglermuffe 29 eines nicht gezeigten Fliehkraftreglers betätigt wird und die axiale Lage des Regelschiebers 26 und damit die Einspritzmenge bestimmt. Die Regelhebelgruppe 28 steht ferner über eine Regelfeder 30 mit einem Drehzahl-Verstellhebel 31 in Wirkverbindung. Mit dem Drehzahl-Verstellhebel 31 wird die Vorspannkraft der Regelfeder 30 verändert und damit die Abregeldrehzahl bestimmt. Weiter ist die Regelhebelgruppe 28 durch die Regelfeder 30 in Anschlag gebracht an einem Anschlaghebel 32, der Teil eines ladedruckabhängigen Vollastanschlages 33 ist.

Der Vollastanschlag 33 umfaßt ferner ein Gehäuse 34, das durch eine Membrane 35 in Kammern 36 und 37 unterteilt ist. Die Kammer 36 ist über eine Leitung 38 mit der Luftzuführung 4 der Diesel-Brennkraftmaschine 1 luftführend verbunden. Die Membrane 35 steht mit einem Steuerschieber 39 in Antriebsverbindung. Der Steuerschieber 39 weist einen Steuerkegel 40 auf, durch den bei einer Axialverschiebung des Steuerschiebers 39 der Anschlaghebel 32 verschwenkt wird. Damit ausgelöst wird ein Verschwenken der Regelhebelgruppe 28 um den Bolzen 27, wodurch der Regelschieber 26 in die eine oder andere Hubrichtung des Verteilerkolbens 14 verschoben wird und damit die Querbohrung 25 zur Einspritzmengen-Zumessung früher oder später abgesteuert wird. Eine Verschiebung des Regelschiebers 26 auf dem Verteilerkolben 14 in der Zeichnung nach rechts bedeutet eine späte Abriegelung der Querbohrung 25 und damit eine erhöhte Einspritzmenge, die bei einer höheren Ladung in der Luftzuführung 4 über den Vollastanschlag 33 angepaßt wird. Dabei bewirkt der höhere Ladedruck in der Kammer 36 über die Membrane 35 entgegen der Wirkung einer Feder 41 eine Verstellung des Steuerschiebers 39. Dabei wird der die Kontur des Steuerkegels 40 in Richtung des schlanken Kegelendes abtastende Anschlaghebel 32 derart verschwenkt, daß über die Regelhebelgruppe 28 eine Verstellung des Regelschiebers 26 in der Zeichnung nach rechts für eine spätere Abregelung bewirkt wird.

Die zweite Kammer 37 des Vollastanschlages 33 steht mit einer Einrichtung 42 in Verbindung, die zur Erzeugung eines Referenzdruckes dient. Die Einrichtung 42 umfaßt eine Unterdruckpumpe 43, die saugseitig über eine Leitung 44 mit der Kammer 37 in Verbindung steht. Ferner steht die Kammer 37 mit einer Drucksteuerdose 45 über eine Leitung 46 in Verbindung. Die Drucksteuerdose 45 dient in Verbindung mit der Unterdruckpumpe 43 zur Ausbildung eines Referenzdruckes in der Kammer 37, wobei der Referenzdruck kleiner ist als der Umgebungsdruck. Weiter ist in der Leitung 46 (oder 44) ein Belüftungsventil 47 angeordnet. Das Belüftungsventil 47 steht über eine Signalleitung 48 mit der Rückmeldeleitung 10 der Steuervorrichtung 8 in Verbindung.

Bei in einem Fahrzeug installierter Diesel-Brennkraftmaschine 1 wird zur Verringerung oder Vermeidung eines Rußausstoßes bei Beschleunigung in der unteren Teillast und wirksamer Abgasrückführung über die Leitung 5 das Verfahren angewandt, den Vollastanschlag 33 bei wirksamer Abgasrückführung in den Bereich niedrigster Vollast-Einspritzmenge zu steuern. Hierzu wird das Belüftungsventil 47 über das Rückmeldesignal — das die Freigabe der Leitung 5 durch das Ventil 6 anzeigt — auf den Signalleitungen 10 und 48 derart angesteuert, daß eine Belüftung der Kammer 37 mit Umgebungsdruck $p_0$ erfolgt. Weiter kann die Unterdruckpumpe 43 außer Wirkung gesetzt werden. Der nunmehr in der Kammer 37 herrschende Umgebungsdruck bewirkt zusammen mit der vorgespannten Feder 41 eine Verlagerung der Membrane 35 in Richtung der Kammer 36, in der bei dem in Rede stehenden Teillastbetrieb etwa ebenfalls Umgebungsdruck herrscht. Die Verlagerung der Membrane 35 bewirkt eine Verstellung des Steuerschiebers 39 in die gezeichnete Position, in der der Anschlaghebel 32 mit einem an das dickere Ende des Steuerkegels 40 anschließenden zylindrischen Bereich 49 zusammenwirkt. Beim Übergang vom Steuerkegel 40 in den zylindrischen Bereich 49 wird der Anschlaghebel 32 derart verschwenkt, daß die Regelhebelgruppe 28 — um den Bolzen 27 schwenkend — den Regelschieber 26 auf dem Verteilerkolben 14 in der Zeichnung nach links verschiebt. Bewirkt wird damit eine frühere Absteuerung der Querbohrung 25 und damit eine niedrigere Einspritzmenge. Diese über den Endsteuerbereich des Vollastanschlages 33 am Steuerschieber 39 durch den zylindrischen Abschnitt 49 erreichte Einspritzmenge ist als « niedrigste Vollast-Einspritzmenge » definiert, die der Brennkraftmaschine 1 in einer bestimmten Höhe über N.N. aufgrund der geringeren Ladung für einen einwandfreien Betrieb zugeführt werden muß.

Um bei dem geschilderten Verfahren die Totzeiten geringzuhalten, sind die Rückmeldeleitung 10 und die Signalleitung 48 jeweils als elektrische Signalleitungen ausgebildet. Wie aus dem Vorstehenden weiter hervorgeht, bleibt für die Dauer der wirksamen Abgasrückführung in der Einrichtung 42 die Unterdruckpumpe 43 abgeschaltet. Damit wird für diese keine Antriebsenergie benötigt und es wird ferner für die Steuerdruckdose 45 eine höhere Lebensdauer erreicht.

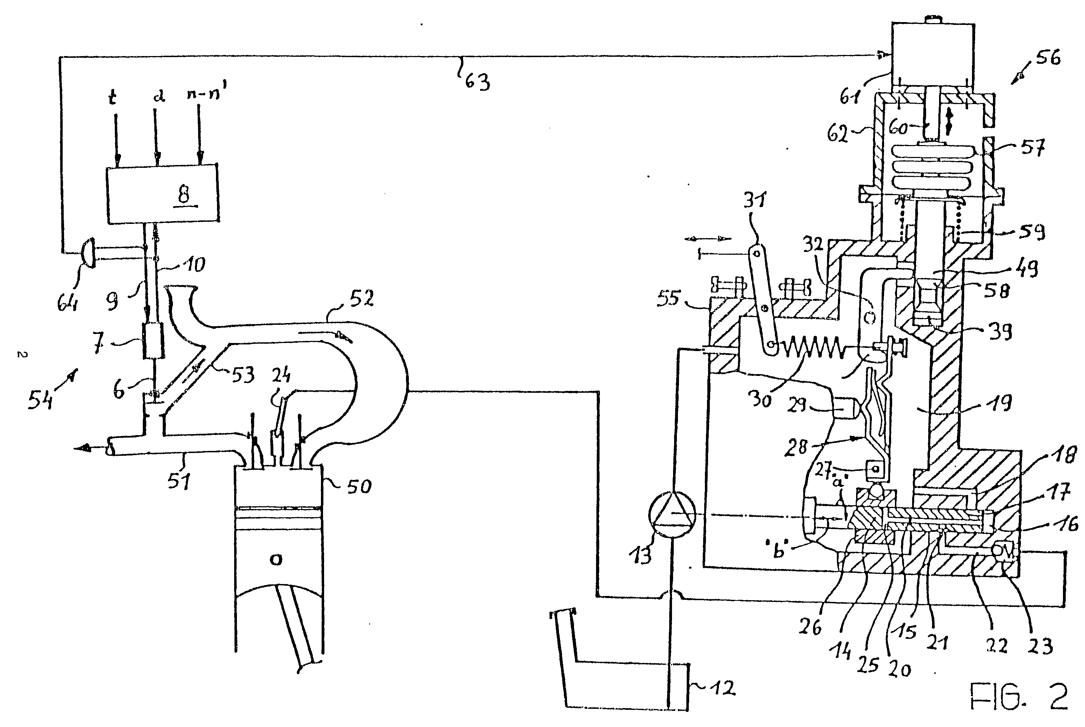

Bei dem Vergleichsbeispiel nach Fig. 2 für eine Vorrichtung wird von einer selbstansaugenden Diesel-Brennkraftmaschine 50 ausgegangen, bei der zwischen einer Auspuffleitung 51 und einer Luftzuführung 52 eine Verbindungsleitung 53 für die Abgasrückführung angeordnet ist. Eine Steuer- oder Regelanlage 54 bewirkt im unteren Teillastbereich der Diesel-Brennkraftmaschine 50 die Abgasrückführung zur Beeinflussung der Schadstoffemissionen. Die Anlage 54 umfaßt die aus Fig. 1 hierfür bereits bekannten Elemente wie das Ventil 6, die Stelleinrichtung 7, die über Signalleitungen 9 und 10 mit der Steuervorrichtung 8 in Wirkverbindung steht. Ferner sind die der Steuereinrichtung 8 zugeführten Steuergrößen mit denen der Fig. 1 identisch.

Weiter ist die Diesel-Brennkraftmaschine 50 mit einer Einspritzpumpe 55 ausgerüstet, die mit Ausnahme eines atmosphärendruckabhängigen Vollastanschlages 56 mit der Einspritzpumpe 11 der Fig. 1 übereinstimmt. In beiden Fig. identische Teile sind daher mit den gleichen Bezugsziffern belegt.

Der Vollastanschlag 56 umfaßt eine Barometerdose 57, die in Antriebsverbindung steht mit dem Steuerschieber 39. Der Steuerschieber 39 weist einen Steuerkegel 58 auf, durch den bei einer axialen Verlagerung des Steuerschiebers 39 der Anschlaghebel 32 verschwenkt wird. Der Steuerkegel 58 geht an seinem Ende mit dem großen Durchmesser in einen zylindrischen Abschnitt 49 über, durch den der Regelschieber 25 auf dem Verteilerkolben über den Anschlaghebel 32 und die Regelhebelgruppe 28 in die Stellung der niedrigsten Vollast-Einspritzmenge gesteuert wird. Am Steuerschieber 39 greift ferner eine Feder 59 an. Sie wirkt einer Vergrößerung der Dosenhöhe der Barometerdose 57 bei abnehmendem Luftdruck entgegen. Die Barometerdose 57 ist mit dem Steuerschieber 39 fest verbunden, so daß sie an ihrer, dem Steuerschieber 39 abgewandten Seite unter der Wirkung der Feder 59 an einem Anschlag 60 zur Anlage kommt.

Der Anschlag 60 ist beweglich ausgebildet. Er wird von einer ansteuerbaren Verstellvorrichtung 61 betätigt, die am Gehäusedeckel 62 fest angeordnet ist. Die Verstellvorrichtung 61 steht über eine elektrische Signalleitung 63 mit einer UND-Schaltung 64 in Verbindung, der die Signale auf den Leitungen 9 und 10 zwischen der Steuervorrichtung 8 und der Stelleinrichtung 7 zugeführt werden.

Bei in unterer Teillast wirksamer Abgasrückführung über die Verbindungsleitung 53 wird die Verstellvorrichtung 61 über die Signale auf den Leitungen 9 und 10 angesteuert. Diese Ansteuerung der Verstellvorrichtung 61 bewirkt eine Verstellung des Anschlages 60 in dem Maße, bis der einschließlich der Barometerdose 57 gegen die Wirkung der Feder 59 verlagerte Steuerschieber 39 mit seinem der « niedrigsten Vollast-Einspritzmenge » entsprechenden zylindrischen Abschnitt 49 dem Anschlaghebel 32 zugeordnet ist. Damit ist auch bei einer selbstansaugenden Diesel-Brennkraftmaschine mit in Teillast wirksamer Abgasrückführung das Verfahren sichergestellt, daß der Vollastanschlag 56 bei wirksamer Abgasrückführung in den Bereich niedrigster Vollast-Einspritzmenge zur Vermeidung bzw. Verminderung eines Rußausstoßes bei Teillastbeschleunigung gesteuert wird.

Wird bei einer Beschleunigung die für das jeweilige Ausführungsbeispiel vorbestimmte Last- oder Drehzahl-Schwelle überschritten, so werden sowohl die Abgasrückführung als auch der jeweilige Vollastanschlag 33 bzw. 56 außer Wirkung gesetzt, wodurch uneingeschränktes Beschleunigungsverhalten gegeben ist.

Bei pneumatisch oder hydraulisch betätigtem Ventil 6 in der jeweiligen Abgasrückführung kann der jeweilige Mediumsdruck auch zur unmittelbaren Ansteuerung des Belüftungsventils 47 oder der Verstellvorrichtung 61 dienen. Im übrigen kann der Vollastanschlag auch nichtmechanischer Art sein, z. B. von elektrischer Art.

**Patentansprüche**

1. Verfahren zum Betrieb einer Diesel-Brennkraftmaschine (1) insbesondere für Fahrzeuge, mit in Teillast wirksamer Abgasrückführung und einer Einspritzpumpe (11) mit absolutdruckabhängig veränderbarem Vollastanschlag (33),

— wobei ein bewirkter Referenzdruck von vorbestimmtem Absolutwert einerseits und Umgebungsdruck bzw. Druck in einer Luftzuführleitung der Brennkraftmaschine andererseits in entsprechend zugeordneten Kammern am Vollastanschlag (33) zur Einwirkung auf eine Einspritzmengen-Zumeßeinrichtung für Null- bis Vollast angreifen,

— wobei in einem Steuerendbereich die niedrigste Vollast-Einspritzmenge erreicht wird, dadurch gekennzeichnet,

— daß in Teillastbeschleunigung unter Beibehaltung der Abgasrückführraten der Vollastanschlag in den Bereich niedrigster Vollast-Einspritzmenge durch Belüften der Referenzdruck-Kammer (37) gesteuert wird.

2. Vorrichtung zur Durchführung des Verfahrens nach Anspruch 1,

— bei einer aufgeladenen Diesel-Brennkraftmaschine (1) mit einer Einspritzpumpe (11),

— die einen einerseits vom Ladedruck beaufschlagbaren Vollastanschlag (33) aufweist,

— der einen mit einer Membrane (35) in Antriebsverbindung stehenden Steuerschieber (39) für einen auf eine Regelhebelgruppe (28) der Zumeßeinrichtung einwirkenden Anschlaghebel (32) umfaßt, ferner

— eine den Steuerschieber in Richtung niedrigster Vollast-Einspritzmenge antreibende Feder (41) und

— Kammern (36, 37) beiderseits der Membrane,

— wobei eine erste Kammer (36) mit der Luftzuführung (4) der Brennkraftmaschine und

— eine zweite Kammer (37) mit einer einen Referenzdruck erzeugenden Einrichtung verbunden ist, dadurch gekennzeichnet,

— daß die Einrichtung (42) ein ansteuerbares Belüftungsventil (47) umfaßt,

— das mittels eines bei wirksamer Abgasrückführung aktivierten Signalgebers angesteuert wird,

— wobei bei belüfteter zweiter Kammer die Feder (41) den Steuerschieber (39) in Richtung niedrigste Vollast-Einspritzmenge verlagert.

3. Vorrichtung nach Anspruch 2, dadurch gekennzeichnet,

— daß die Einrichtung (42) eine mit der Saugseite einer Unterdruckpumpe (43) in Reihe geschaltete Drucksteuerdose (45) umfaßt, und

— daß zwischen beiden das Belüftungsventil (47) und die zweite Kammer (37) des Vollastanschlages (33) angeordnet sind.

4. Vorrichtung nach Anspruch 2, dadurch gekennzeichnet, daß zwischen dem Signalgeber und dem Belüftungsventil (47) eine elektrische Signalleitung (48) vorgesehen ist.

Claims

1. A method of operating a diesel engine (1), more particularly for motor vehicles, comprising exhaust-gas recirculation operative under partial load and an injection pump (11) having a full-load limit stop (33) variable in dependence on the absolute pressure,

— a reference pressure brought about at a predetermined absolute value on the one hand and atmospheric pressure or the pressure in a line supplying air to the engine on the other hand acting in correspondingly-associated chambers on the full-load limit stop (33) in order to actuate a device for metering the injected amounts for zero to full load,

— the lowest amount injected at full load being attained in a limiting control range, characterised in that

— during acceleration under partial load, the full-load limit stop is moved into the lowest full-load injected-amount region by supplying air to the reference-pressure chamber (37), without altering the exhaust-gas recirculation rates.

2. Means for working the method according to claim 1,

— in the case of a loaded diesel engine (1) comprising an injection pump (11),

— which comprises a full-load limit stop (33) actuated on the one hand by the loading pressure,

— the stop comprising a distributing slide valve (39) in drive connection with a diaphragm (35) for a stop lever (32) acting on a group (28) of control levers in the metering device, and

— a spring (41) driving the distributing slide valve in the direction of the lowest amount injected under full load and

— chambers (36, 37) on both sides of the diaphragm,

— a first chamber (36) being connected to the air inlet (4) of the engine and

— a second chamber (37) being connected to a device generating a reference pressure, characterised in that

— the device (42) comprises an adjustable air inlet valve (47),

— which is actuated by a signal pick-up which operates when the exhaust gas is being recirculated, and

— when air is being supplied to the second chamber the spring (41) moves the distributing guide valve (39) in the direction towards the lowest amount injected under full load.

3. Means according to claim 2, characterised in that

— the device (42) comprises a pressure-control box (45) connected in series with the suction side of a negative-pressure pump (43), and

— the air inlet valve (47) and the second chamber (37) of the full-load limit stop (33) are disposed between both.

4. A means according to claim 2, characterised in that an electric signal line (48) is provided between the signal pick-up and the air inlet valve (47).

## Revendications

1. Méthode d'opération d'un moteur Diesel (1) en particulier pour véhicules avec recyclage des gaz d'échappement actif en cas de charge partielle et avec une pompe d'injection (11) munie d'une butée à pleine charge (33) variable en fonction de la pression absolue, dans lequel :

— pression de référence provoquée d'une valeur absolue prédéterminée d'une part, et la pression ambiante ou la pression régnant dans une conduite d'amenée d'air du moteur à combustion interne d'autre part, agissent dans des chambres associées de manière correspondante sur la butée de pleine charge (33) en vue de provoquer une action sur le dispositif de dosage du débit injecté pour la charge nulle et pour la pleine charge,

— le débit injecté de pleine charge le plus bas étant atteint dans une zone finale de commande, caractérisé en ce que dans le cas d'une accélération sous charge partielle en conservant les taux de recyclage des gaz d'échappement, la butée de pleine charge est commandée dans la zone du plus faible débit injecté de pleine charge, par aération de la chambre de pression de référence (37).

2. Dispositif pour l'exécution du procédé selon la revendication 1, caractérisé en ce que :

— pour un moteur Diesel (1) suralimenté, comportant une pompe d'injection (11),

— présentant une butée de pleine charge (33) sollicitable par la pression de suralimentation,

— qui comprend un tiroir de commande (39), relié en entraînement à une membrane (35) destinée à un levier de butée (32) agissant sur un groupe à levier de réglage (28) du dispositif de dosage, comprenant en outre :

— un ressort (41) entraînant le tiroir de commande en direction du plus faible débit injecté de pleine charge et

— des chambres (36, 37) disposées des deux côtés de la membrane,

— une première chambre (36) étant reliée à l'alimentation d'air (4) du moteur à combustion interne et

— une deuxième chambre (37) étant reliée à un dispositif produisant une pression de référence, caractérisé en ce que :

— le dispositif (42) comporte une soupape d'aération (47) commandable,

— qui est commandé au moyen d'un transmetteur de signal activé lorsque le recyclage des gaz devient actif,

— la deuxième chambre étant aérée, le ressort (41) déplaçant le tiroir de commande (39) en direction du plus faible débit d'injection de pleine charge.

3. Dispositif selon la revendication 2, caractérisé en ce que :

— le dispositif (42) comporte une prise de commande de pression (45) branchée en série avec le côté aspiration d'une pompe à vide (43), et

— en ce qu'entre les deux sont disposées la soupape d'aération (47) et la deuxième chambre (37) de la butée de pleine charge (33).

4. Dispositif selon la revendication 2, caractérisé en ce qu'une ligne de signalisation (48) est prévue entre le transmetteur de signal et la soupape d'aération (47).

EP 0 172 475 B1

FIG. 1

FIG. 2

EP 0 172 475 B1